# EUROPEAN PATENT APPLICATION

(11) **EP 2 525 044 A2**
(43) Date of publication of application: **21.11.2012**
(21) Application number: 12168445.0
(22) Date of filing: 17.05.2012
(51) Int. Cl.: F01D 5/18, F01D 5/28

(54) **Components with precision surface channels and hybrid machining method**

(30) Priority: 18.05.2011 US 201113110080
(71) Applicant: General Electric Company, Schenectady, NY 12345 (US)
(72) Inventor: Bunker, Ronald Scott, Niskayuna, NY New York 12309 (US); Wei, Bin, Niskayuna, NY New York 12309 (US)
(74) Representative: Cleary, Fidelma

(57) **Abstract**

Methods of forming one or more grooves (132) in a component (100) are provided. One method includes using a first machining technique to form one or more preliminary grooves in an outer surface (112) of a substrate (110). Each preliminary groove has a base and extends at least partially along the outer surface of the substrate, and the substrate has an inner surface (116) that defines at least one hollow, interior space (114). The method further includes using a second machining technique to further machine the preliminary groove(s) to form the respective groove(s). In addition, the method includes forming one or more access holes through the base of a respective groove to connect the respective groove in fluid communication with the respective hollow interior space (114). Components with grooves (132) comprise a sidewall radius R in a range of 0≤R≤0.127 mm.

## Description

### BACKGROUND

The invention relates generally to gas turbine engines, and, more specifically, to micro-channel cooling therein.

In a gas turbine engine, air is pressurized in a compressor and mixed with fuel in a combustor for generating hot combustion gases. Energy is extracted from the gases in a high pressure turbine (HPT), which powers the compressor, and in a low pressure turbine (LPT), which powers a fan in a turbofan aircraft engine application, or powers an external shaft for marine and industrial applications.

Engine efficiency increases with temperature of combustion gases. However, the combustion gases heat the various components along their flowpath, which in turn requires cooling thereof to achieve a long engine lifetime. Typically, the hot gas path components are cooled by bleeding air from the compressor. This cooling process reduces engine efficiency, as the bled air is not used in the combustion process.

Gas turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined, and suitably cooled.

In all of these exemplary gas turbine engine components, thin metal walls of high strength superalloy metals are typically used for enhanced durability while minimizing the need for cooling thereof. Various cooling circuits and features are tailored for these individual components in their corresponding environments in the engine. For example, a series of internal cooling passages, or serpentines, may be formed in a hot gas path component. A cooling fluid may be provided to the serpentines from a plenum, and the cooling fluid may flow through the passages, cooling the hot gas path component substrate and coatings. However, this cooling strategy typically results in comparatively low heat transfer rates and non-uniform component temperature profiles.

Micro-channel cooling has the potential to significantly reduce cooling requirements by placing the cooling as close as possible to the heated region, thus reducing the temperature difference between the hot side and cold side of the main load bearing substrate material for a given heat transfer rate. However, to achieve micro-channel cooling, the channels should have sharp edges to facilitate a flaw free deposition of a first metallic (structural) coating, and to reduce or eliminate interface voids that could initiate cracking.

It would therefore be desirable to provide a method for forming micro-channels with sharp edges to facilitate a flaw free deposition of a first structural coating, and to reduce or eliminate interface voids that could initiate cracking. It would further be desirable to provide a method for forming micro-channels with reduced processing time and reduced channel-to-channel variation.

### BRIEF DESCRIPTION

In one aspect, the present invention resides in a method of forming one or more grooves in a component. The method includes using a first machining technique to form one or more preliminary grooves in an outer surface of a substrate. Each preliminary groove has a base and extends at least partially along the outer surface of the substrate, and the substrate has an inner surface that defines at least one hollow, interior space. The method further includes using a second machining technique to further machine the preliminary groove(s) to form the respective groove(s). In addition, the method includes forming one or more access holes through the base of a respective groove to connect the respective groove in fluid communication with the respective hollow interior space.

In another aspect, the present invention resides in a component that includes a substrate comprising an outer surface and an inner surface, where the inner surface defines at least one hollow, interior space. The outer surface defines one or more grooves, and each groove extends at least partially along the outer surface of the substrate and has a base. Each groove is characterized by a sidewall radius R in a range of 0≤R≤0.127 mm. One or more access holes extend through the base of a respective groove to place the groove in fluid communication with the respective hollow interior space. The component further includes a coating disposed over at least a portion of the outer surface of the substrate and extending over the groove(s), such that the groove(s) and the coating together define one or more channels for cooling the component.

### DRAWINGS

Embodiments of the present invention will now be described, by way of example only, with reference to the accompanying drawings in which:
FIG. 1 is a schematic illustration of a gas turbine system;
FIG. 2 is a schematic cross-section of an example airfoil configuration with cooling channels;
FIGS. 3-5 schematically illustrate process steps for forming grooves in a substrate, using a hybrid machining method, in accordance with aspects of the present invention;
FIGS. 6-8 schematically illustrate process steps for forming re-entrant grooves in a substrate, using a hybrid machining method, in accordance with aspects of the present invention;
FIGS. 9-11 schematically illustrate process steps for forming grooves in a substrate, using a fugitive coating with a hybrid machining method, in accordance with aspects of the present invention;
FIGS. 12-15 schematically illustrate process steps for forming grooves in a substrate through a structural coating using a hybrid machining method, in accordance with aspects of the present invention;
FIGS. 16-18 schematically illustrate process steps for forming grooves in a structural coating using a hybrid machining method, in accordance with aspects of the present invention
FIG. 19 schematically depicts, in perspective view, three example channels that are formed in the substrate and channel coolant to respective film cooling holes;
FIG. 20 is a cross-sectional view of one of the example channels of FIG. 19 and shows the micro-channel conveying coolant from an access hole to a film cooling hole; and
FIG. 21 is a schematic cross-section of an example airfoil configuration with cooling channels formed in a structural coating, in accordance with aspects of the present invention.

### DETAILED DESCRIPTION

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the term "combination" is inclusive of blends, mixtures, alloys, reaction products, and the like.

Moreover, in this specification, the suffix "(s)" is usually intended to include both the singular and the plural of the term that it modifies, thereby including one or more of that term (e.g., "the passage hole" may include one or more passage holes, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

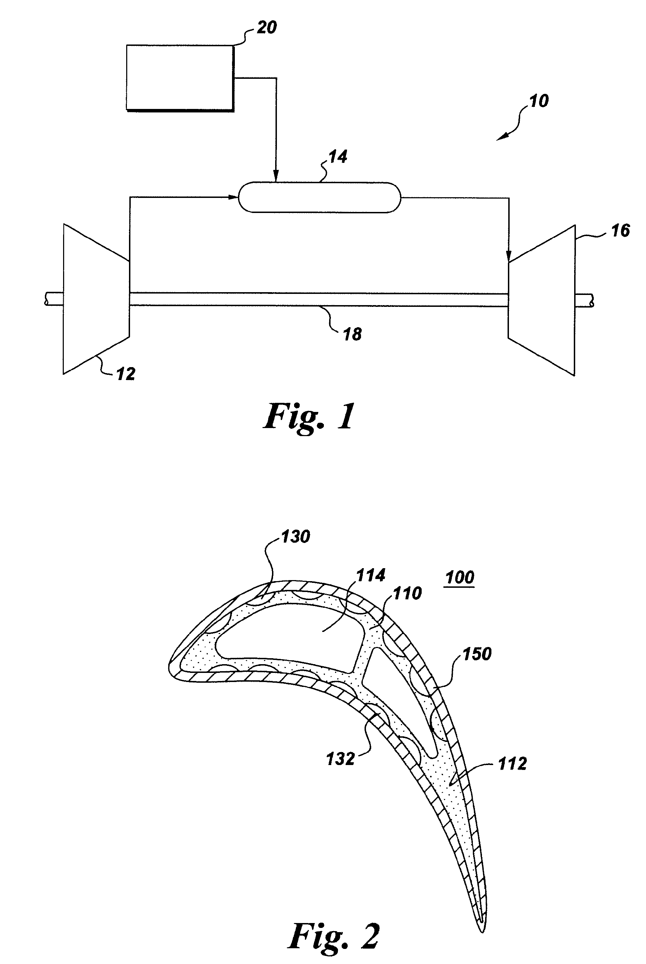

FIG. 1 is a schematic diagram of a gas turbine system 10. The system 10 may include one or more compressors 12, combustors 14, turbines 16, and fuel nozzles 20. The compressor 12 and turbine 16 may be coupled by one or more shaft 18. The shaft 18 may be a single shaft or multiple shaft segments coupled together to form shaft 18.

The gas turbine system 10 may include a number of hot gas path components 100. A hot gas path component is any component of the system 10 that is at least partially exposed to a high temperature flow of gas through the system 10. For example, bucket assemblies (also known as blades or blade assemblies), nozzle assemblies (also known as vanes or vane assemblies), shroud assemblies, transition pieces, retaining rings, and compressor exhaust components are all hot gas path components. However, it should be understood that the hot gas path component 100 of the present invention is not limited to the above examples, but may be any component that is at least partially exposed to a high temperature flow of gas. Further, it should be understood that the hot gas path component 100 of the present disclosure is not limited to components in gas turbine systems 10, but may be any piece of machinery or component thereof that may be exposed to high temperature flows.

When a hot gas path component 100 is exposed to a hot gas flow 80, the hot gas path component 100 is heated by the hot gas flow 80 and may reach a temperature at which the hot gas path component 100 fails. Thus, in order to allow system 10 to operate with hot gas flow 80 at a high temperature, increasing the efficiency and performance of the system 10, a cooling system for the hot gas path component 100 is required.

In general, the cooling system of the present disclosure includes a series of small channels, or micro-channels, formed in the surface of the hot gas path component 100. For industrial sized power generating turbine components, "small" or "micro" channel dimensions would encompass approximate depths and widths in the range of 0.25 mm to 1.5 mm, while for aviation sized turbine components channel dimensions would encompass approximate depths and widths in the range of 0.15 mm to 0.5 mm. The hot gas path component may be provided with a cover layer. A cooling fluid may be provided to the channels from a plenum, and the cooling fluid may flow through the channels, cooling the cover layer.

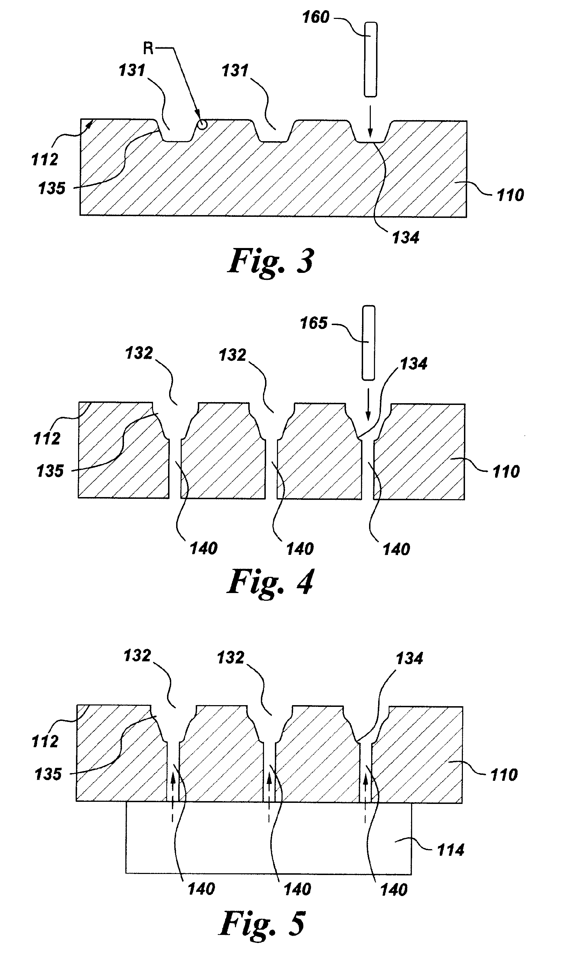

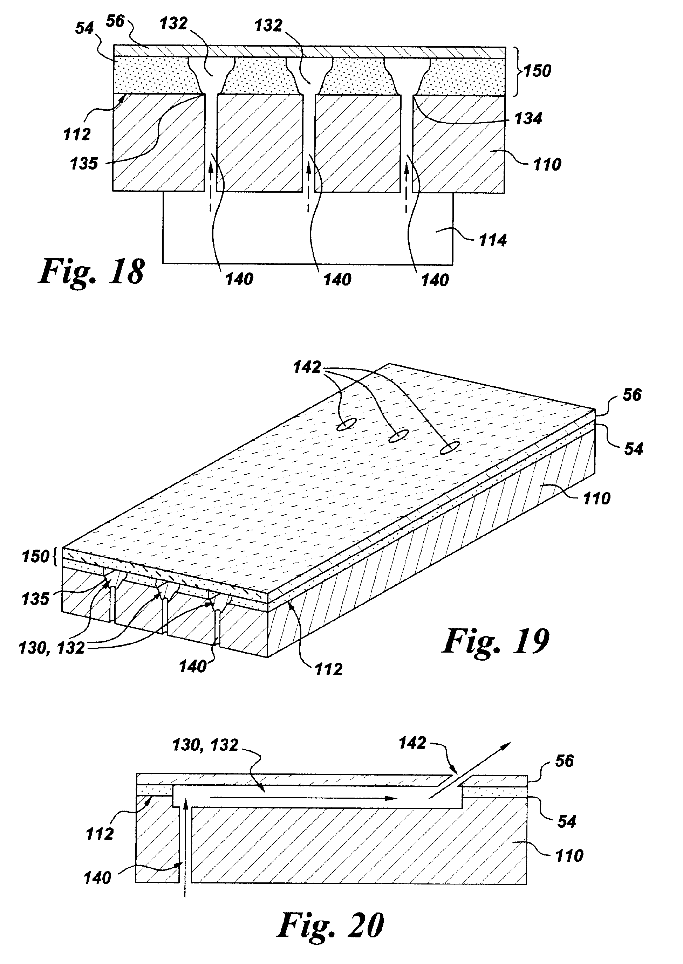

A method of forming one or more grooves 132 in a component 100 is described with reference to FIGS. 2-15. As indicated, for example, in FIG. 3, the method includes using a first machining technique to form one or more preliminary grooves 131 in an outer surface 112 of a substrate 110. For the specific example shown in FIG. 3, an abrasive liquid jet 160 is used to form the preliminary grooves, and this technique is discussed in detail below. As indicated in FIG. 4, each of the preliminary grooves 131 has a base 134 and, as shown for example in FIGS. 19 and 20, extends at least partially along the outer surface 112 of the substrate 110. As indicated, for example, in FIG. 2, the substrate 110 has an inner surface 116 that defines at least one hollow, interior space 114.

The substrate 110 is typically cast prior to forming the preliminary grooves 131 in the surface 112 of the substrate 110. As discussed in US Patent No. 5,626,462, substrate 110 may be formed from any suitable material. Depending on the intended application for component 100, this could include Ni-base, Co-base and Fe-base superalloys. The Ni-base superalloys may be those containing both γ and γ' phases, particularly those Ni-base superalloys containing both γ and γ' phases wherein the γ' phase occupies at least 40% by volume of the superalloy. Such alloys are known to be advantageous because of a combination of desirable properties including high temperature strength and high temperature creep resistance. The substrate material may also comprise a NiAl intermetallic alloy, as these alloys are also known to possess a combination of superior properties including high temperature strength and high temperature creep resistance that are advantageous for use in turbine engine applications used for aircraft. In the case of Nb-base alloys, coated Nb-base alloys having superior oxidation resistance will be preferred, particularly those alloys comprising Nb-(27-40)Ti-(4.5-10.5)Al-(4.5-7.9)Cr-(1.5-5.5)Hf-(0-6)V, where the composition ranges are in atom per cent. The substrate material may also comprise a Nb-base alloy that contains at least one secondary phase, such as a Nb-containing intermetallic compound comprising a silicide, carbide or boride. Such alloys are composites of a ductile phase (i.e., the Nb-base alloy) and a strengthening phase (i.e., a Nb-containing intermetallic compound). For other arrangements, the substrate material comprises a molybdenum based alloy, such as alloys based on molybdenum (solid solution) with Mo₅SiB₂ and Mo₃Si second phases. For other configurations, the substrate material comprises a ceramic matrix composite, such as a silicon carbide (SiC) matrix reinforced with SiC fibers. For other configurations the substrate material comprises a TiAl-based intermetallic compound.

As indicated, for example, in FIG. 4, the method further includes using a second machining technique to further machine the one or more preliminary grooves 131 to form the respective one or more grooves 132. For the specific example shown in FIG. 4, a spinning electrode 165 is used to further machine the preliminary grooves using milling electric discharge machining (EDM), as discussed below.

For the example process shown in FIG. 5, the component fabrication method further includes forming one or more access holes 140 through the base 134 of a respective one of the grooves 132 to provide fluid communication between the grooves 132 and the respective hollow interior space(s) 114. The access holes 140 are typically formed after the preliminary grooves 131 have been formed but may also be formed prior to the first machining operation or between the first and second machining operations. The access holes 140 are typically circular or oval in cross-section and may be formed, for example using one or more of laser machining (laser drilling), abrasive liquid jet, EDM and electron beam drilling. The access hole(s) 140 may be formed using the first or second machining technique or using another machining technique, for example, laser drilling. The access holes 140 may be normal to the base 134 of the respective grooves 132 (as shown in FIG. 5) or, more generally, may be drilled at angles in a range of 20-90 degrees relative to the base 134 of the groove.

As noted above, for the example process shown in FIG. 5, the first machining technique comprises abrasive liquid jet, and the preliminary grooves 131 are formed by directing an abrasive liquid jet 160 at the outer surface 112 of the substrate 110. Example water jet drilling processes and systems are provided in commonly assigned US Patent Application Ser. No. 12/790,675, "Articles which include chevron film cooling holes, and related processes," filed May 28, 2010, which is incorporated by reference herein in its entirety. As explained in US Patent Application Ser. No. 12/790,675, the water jet process typically utilizes a high-velocity stream of abrasive particles (e.g., abrasive "grit"), suspended in a stream of high pressure water. The pressure of the water may vary considerably, but is often in the range of about 35-620 MPa. A number of abrasive materials can be used, such as garnet, aluminum oxide, silicon carbide, and glass beads.

In addition, and as explained in US Patent Application Ser. No. 12/790,675, the water jet system can include a multi-axis computer numerically controlled (CNC) unit. The CNC systems themselves are known in the art, and described, for example, in U.S. Patent Publication 2005/0013926 (S. Rutkowski et al), which is incorporated herein by reference. CNC systems allow movement of the cutting tool along a number of X, Y, and Z axes, as well as rotational axes. Beneficially, the preliminary grooves 131 can be formed using an abrasive liquid jet at a linear rate of up to 2.5 cm per second for channels that are roughly 0.75 mm by 0.75 mm in cross section. However, because the preliminary grooves 131 formed using abrasive liquid jets may not possess highly precise and uniform widths and may lack the desired sharp edges at the groove-coating interface, the second machining technique is used to finish the grooves 132.

The second machining technique may be formed using a variety of machining processes. For example, the second machining technique may be selected from the group consisting of electrochemical machining (ECM), EDM, milling EDM (EDM with a spinning electrode 165), and laser machining (laser drilling). More particularly, if ECM is selected, either etching through an electrically insulating mask or plunge ECM may be employed. US Patent No. 6,644,921, Bunker et al.*,* "Cooling passages and methods of fabrication," which is incorporated by reference herein in its entirety, describes a pulsed ECM process. Briefly, pulsed ECM uses the ECM process with an electrode having a patterned mask to block the machining in regions where material removal is not desired. For plunge ECM, no mask is employed. If a mask is used, the method may further include depositing an electrically insulating mask (not shown) on the substrate prior to performing the first machining operation, using an abrasive liquid jet to form the preliminary grooves, and then etching through the mask to form the grooves. As noted above, US Patent No. 6,644,921 describes performing ECM by etching through a mask.

For the example process shown in FIGS. 3 and 4, the second machining technique comprises milling EDM. Beneficially, milling EDM provides superior control for forming the desired edges at the groove/coating interface. For particular processes, milling EDM is also used to form the access hole(s) 140. For example, the preliminary grooves 131 may be formed using an abrasive liquid jet, as indicated in FIG. 3. Then, milling EDM may be used to form the access holes 140 and to finish the grooves 132. Alternatively, milling EDM may be used to first finish the grooves 132 and then to form the access holes 140.

As noted above, the abrasive liquid jet system may include a multi-axis CNC unit (not shown). For certain arrangements, the spinning electrode 165 may be mounted on a machining platform or device similar to that used for the liquid jet 160. For these configurations, the spinning electrode 165 may be controlled by application of machining programming similar to that used for the liquid jet, in order to run the spinning electrode along the channels and "clean up" the side walls to make them vertical, and to remove any edge radiusing from the liquid jet process. This milling EDM process could proceed as a single step for each channel in which the milling EDM tool diameter is large enough to just fit inside the channel. However, because the liquid jet channels may not possess highly precise and uniform widths, the milling EDM may be performed in two passes, once on each channel side wall 135. In this latter case, the milling EDM tool diameter may be much smaller, and thus not affect the formation of recast as much. This will also allow a much greater degree of freedom in channel width variation, divorcing the milling EDM process from tight tolerances. The milling EDM tool need not extend to the bottom of the channels, and for particular embodiments will not. The primary objective of the milling EDM operation is to form sharp edges at the top of the channels. Thus, the CNC may be programmed to simply "kiss off' those edges and leave the remainder of the side walls 135 somewhat non-vertical, as indicated in FIGS. 4 and 5. That is, the side walls 135 may have sharp edges with a defined geometry, for example straight or angled.

Beneficially, this hybrid machining process provides the speed (and hence reduced manufacturing cost) of abrasive liquid jet, with the precision machining of milling EDM. In this way, the inventive method provides the desired sharp edges to facilitate a flaw free deposition of the first metallic coating. In addition, similar component datum and programming can be used for both operations, or the programming for one of the machining techniques may be based on the programming for the other machining technique.

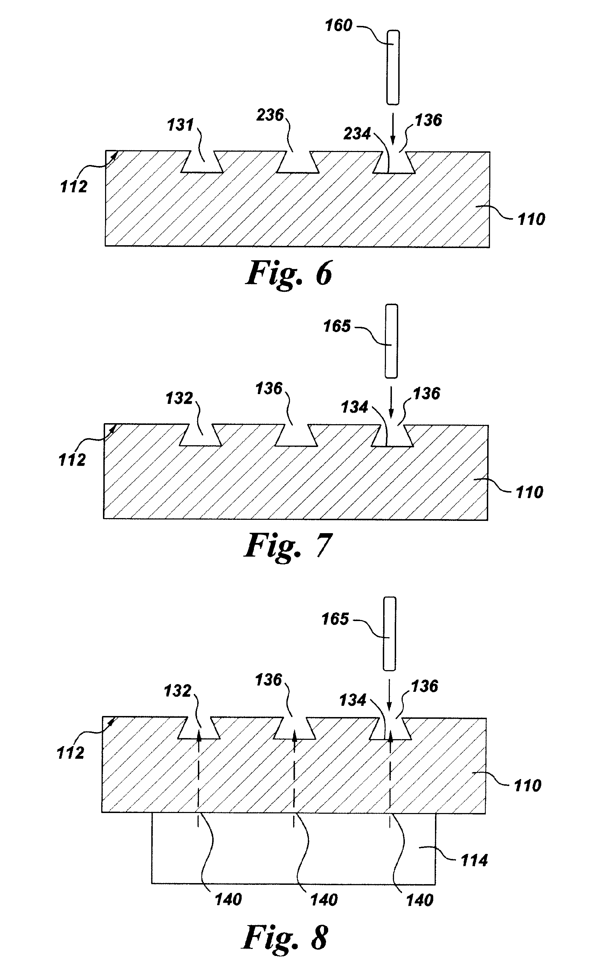

FIGS. 6-8 schematically illustrate process steps for forming re-entrant grooves 132 in a substrate 110 using a hybrid machining method. As indicated for example in FIG. 6, for this process, each preliminary grooves 131 is formed using the abrasive liquid jet 160 and has a base 234 that is wider than the top 236, such that each preliminary groove 131 comprises a re-entrant shaped preliminary groove 131. In this manner, the abrasive liquid jet 160 is used to directly form a re-entrant shaped groove as the preliminary groove 131. After forming re-entrant shaped preliminary grooves 131, the second machining technique may be formed using a variety of machining processes, including ECM, EDM, milling EDM (EDM with a spinning electrode 165), and laser machining. For the arrangement shown in FIG. 7, milling EDM is used to perform the finishing operations for the re-entrant shapes grooves 132. As indicated in FIG. 7, after the machining operations, the base 134 of the groove 132 is wider than the top 136, such that each groove 132 comprises a re-entrant shaped groove 132. In addition to the process described with reference to FIGS. 6 and 7, re-entrant grooves can be formed by forming preliminary grooves as open grooves, for example as shown in FIG. 3, and then using EDM or another machining technique to "finish" the upper edges, as shown for example in FIG. 4, and then using an abrasive liquid jet to widen the bottom of the groove, such that the groove then becomes re-entrant in shape.

Re-entrant grooves 132 are discussed in commonly assigned, US Patent Application Ser. No. 12/943,624, Bunker et al., "Components with re-entrant shaped cooling channels and methods of manufacture," which is incorporated by reference herein in its entirety. Beneficially, the use of re-entrant shaped grooves makes it easier to deposit a coating across the top of the groove, while also permitting the formation of sufficiently large channels 130 to meet the cooling requirements for the component 100. For particular configurations, the base 134 of a respective one of the re-entrant shaped grooves 132 is at least 2 times wider than the top 136 of the respective groove 132. For example, if the base 134 of the groove 132 is 0.75 millimeters, the top 136 would be less than 0.375 millimeters in width, for this configuration. For more particular configurations, the base 134 of the respective re-entrant shaped groove 132 is at least 3 times wider than the top 136 of the respective groove 132, and still more particularly, the base 134 of the respective re-entrant shaped groove 132 is in a range of about 3-4 times wider than the top 136 of the respective groove 132. Beneficially, a large base to top ratio increases the overall cooling volume for the micro-channel 130, while making it easier to deposit a coating across the top of the groove.

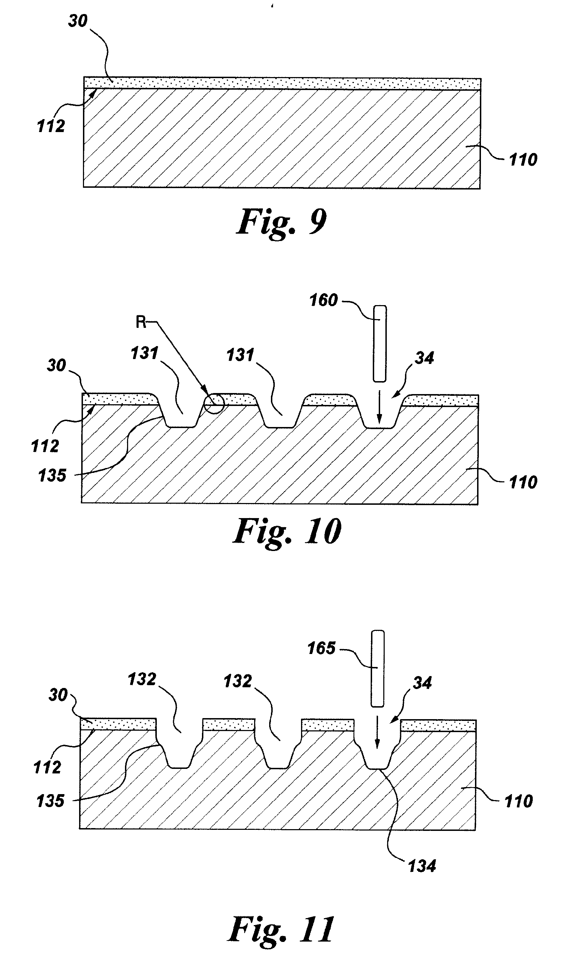

FIGS. 9-11 schematically illustrate process steps for forming grooves 132 in a substrate 110, using a fugitive coating with a hybrid machining method. As indicated for example in FIG. 9, this process includes depositing a fugitive coating 30 on the outer surface 112 of the substrate 110 prior to performing the first machining operation. As indicated in FIGS. 10 and 11, for this process the substrate 110 is machined through the fugitive coating 30, and the machining forms one or more openings 34 in the fugitive coating 30. As discussed in US. Patent Application. Ser. No. 12/943,563, Bunker et al*.* "Method of fabricating a component using a fugitive coating," which patent application is hereby incorporated herein in its entirety, the fugitive coating 30 acts as a machining mask for formation of the channels, and facilitates the formation of cooling channels 130 with the requisite sharp, well defined edges at the coating interface.

Additionally, the component fabrication method may optionally further include drying, curing or sintering the fugitive coating 30 prior to performing the machining operations. For particular process configurations, the thickness of the fugitive coating 30 deposited on the substrate 110 is in a range of about 0.5-2.0 millimeters. In one non-limiting example, the fugitive coating 30 comprises a one millimeter thick polymer based coating. The fugitive coating 30 may be deposited using a variety of deposition techniques, including powder coating, electrostatic coating, dip-coating, spin coating, chemical vapor deposition and application of a prepared tape. More particularly, the fugitive coating is essentially uniform and is able to adhere, but does not harm the substrate 110 during processing or subsequent removal.

For particular process configurations, the fugitive coating 30 is deposited using powder coating or electrostatic coating. For example process configurations, the fugitive coating 30 comprises a polymer. For example, the fugitive coating 30 may comprise a polymer based coating, such as pyridine, which may be deposited using chemical vapor deposition. Other example polymer based coating materials include resins, such as polyester or epoxies. Example resins include photo-curable resins, such as a light curable or UV curable resin, non-limiting examples of which include a UV/Visible light curable masking resin, marketed under the trademark Speedmask 729® by DYMAX, having a place of business in Torrington, Connecticut, in which case, the method further includes curing the photo-curable resin 30, prior to performing the machining operations. For other process configurations, the fugitive coating 30 may comprise a carbonaceous material. For example, the fugitive coating 30 may comprise graphite paint. Polyethylene is yet another example coating material. For other process configurations, the fugitive coating 30 may be enameled onto the substrate 110.

The fugitive coating 30 is removed after performing the second machining technique, and it should be noted that the fugitive coating may be removed before or after the access holes 140 (FIG. 5) are formed. Depending on the specific materials and processes, the fugitive coating 30 may be removed using mechanical (for example, polishing), thermal (for example combustion), plasma-based (for example plasma etching) or chemical (for example, dissolution in a solvent) means or using a combination thereof.

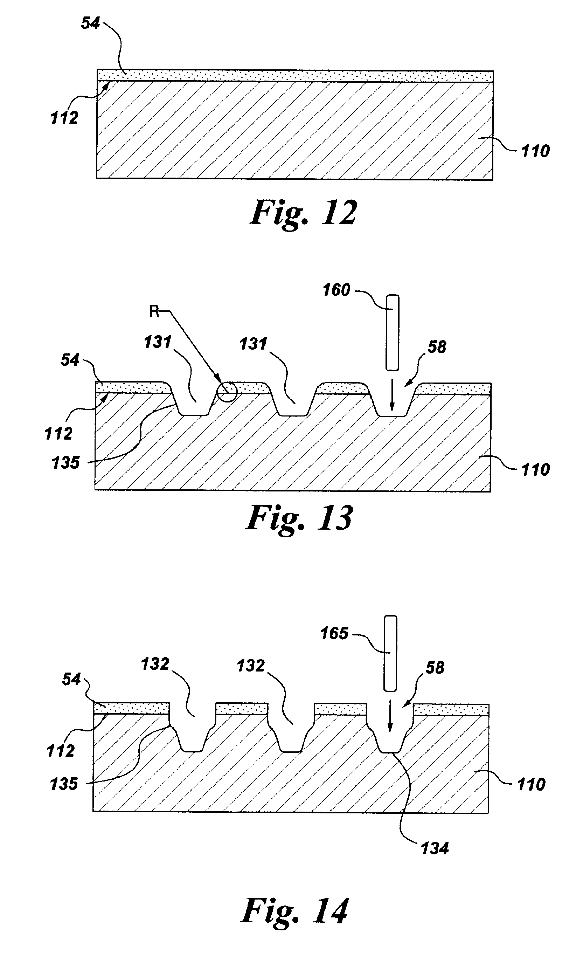

FIGS. 12-15 schematically illustrate process steps for forming grooves 132 in a substrate 110 through a structural coating 54 using a hybrid machining method. As indicated for example in FIG. 12, this process includes depositing a structural coating 54 on the outer surface 112 of the substrate 110 prior to forming the preliminary groove(s) 131. Example structural coatings are provided in US Patent No. 5,640,767 and US Patent No. 5,626,462, which are incorporated by reference herein in their entirety. As discussed in US Patent No. 5,626,426, the structural coatings are bonded to portions of the surface 112 of the substrate 110. For example configurations, the structural coating 54 has a thickness of less than about 1.0 mm and, more particularly, less than about 0.5 mm. For example, structural coatings 54 formed using an ion plasma deposition may have thicknesses of less than about 0.5 mm, but for a thermal plasma spray (such as high velocity oxygen fuel) coating, the thickness of the structural coating 54 may be less than about 1 mm.

The structural coating may be deposited using a variety of techniques. For particular processes, the structural coating is deposited by performing an ion plasma deposition (cathodic arc). Example ion plasma deposition apparatus and method are provided in commonly assigned, US Published Patent Application No. 20080138529, Weaver et al, "Method and apparatus for cathodic arc ion plasma deposition," which is incorporated by reference herein in its entirety. Briefly, ion plasma deposition comprises placing a cathode formed of a coating material into a vacuum environment within a vacuum chamber, providing a substrate 110 within the vacuum environment, supplying a current to the cathode to form a cathodic arc upon a cathode surface resulting in arc-induced erosion of coating material from the cathode surface, and depositing the coating material from the cathode upon the substrate surface 112.

For certain hot gas path components 100, the structural coating comprises a nickel-based or cobalt-based alloy, and more particularly comprises a superalloy or a (NiCo)CrAlY alloy. For example, where the substrate material is a Ni-base superalloy containing both γ and γ' phases, structural coating may comprise similar compositions of materials, as discussed in greater detail below with reference to US Patent No. 5,626,462.

For particular process configurations, a structural coating is deposited by performing at least one of a thermal spray process and a cold spray process. For example, the thermal spray process may comprise combustion spraying or plasma spraying, the combustion spraying may comprise high velocity oxygen fuel spraying (HVOF) or high velocity air fuel spraying (HVAF), and the plasma spraying may comprise atmospheric (such as air or inert gas) plasma spray, or low pressure plasma spray (LPPS, which is also know as vacuum plasma spray or VPS). In one non-limiting example, a NiCrAlY coating is deposited by HVOF or HVAF. Other example techniques for depositing the structural coating include, without limitation, sputtering, electron beam physical vapor deposition, electroless plating, and electroplating. In addition, the method may further optionally include performing a heat treatment after depositing the structural coating 54 and prior to performing the machining operations. As indicated in FIG. 13, for the illustrated process, the preliminary grooves 131 are formed by performing the first machining technique to machine through the structural coating 54, such that one or more openings 58 are defined in the structural coating 54. Although not expressly shown, the preliminary groove(s) 131 may extend into the substrate 110. Similarly, as indicated in FIG. 14, for the illustrated process, the grooves 132 are formed by performing the second machining technique through the openings 58 in the structural coating 54. Although not expressly shown, the groove(s) 132 may extend into the substrate 110. Typically, a second structural coating layer (not shown) will be deposited over the structural coating after the machining operations have been performed. Beneficially, using the two structural coating layers improves the matching of material properties and microstructure at the critical channel interfacial region. This enhances the bond between the coatings and the substrate, thereby enhancing the durability of the cooling channels.

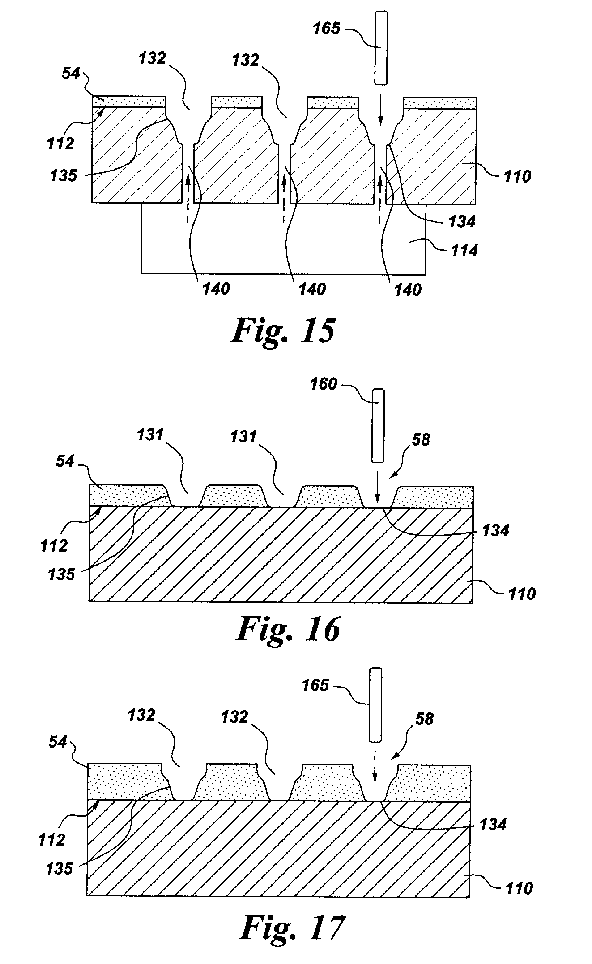

Although not expressly shown, the process described above with reference to FIGS. 12-14 may further optionally include depositing a fugitive coating 30 on the structural coating 54 prior to performing the first machining technique. For this process, the substrate 110 and the structural coating 54 are machined through the fugitive coating 30, and the machining forms one or more openings 34 in the fugitive coating 30, as discussed above with reference to FIGS. 10 and 11. This process further includes removing the fugitive coating 30 after performing the second machining technique. The structural coating 54 will remain however, as shown in FIG. 15. The fugitive coating 30 may be removed before or after the access holes 140 are formed. Although this particular process is not expressly shown, the fugitive coating 30 shown in FIG. 9 may be deposited on the structural coating shown in FIG. 12, and the machining steps shown in FIGS. 13 and 14 may be performed through the two coatings 30, 54. As noted above, the fugitive coating 30 acts as a machining mask for formation of the channels, and for this process facilitates the formation of cooling channels 130 with the requisite sharp, well defined edges at the interface between the structural coating 54 and a subsequently deposited structural coating (not shown).

Another method of forming one or more grooves 132 in a component 100 is described with reference to FIGS. 12 and 16-18. As indicated, for example, in FIG. 12, the method includes depositing a structural coating 54 on an outer surface 112 of a substrate 110. As indicated, for example in FIG. 18, the substrate 110 has at least one hollow interior space 114. The substrate 110 and structural coating 54 are described above. Example coating deposition techniques include ion plasma deposition, thermal spray, and cold spray, as discussed above. The method may further optionally include further performing a heat treatment after depositing the structural coating 54.

As indicated in FIG. 16, the method further includes using a first machining technique to form one or more preliminary grooves 131 in the structural coating 54. As indicated in FIG. 16, each of the preliminary grooves 131 has a base 134 and as shown for example in FIGS. 19 and 20, extends at least partially along the substrate 110. As indicated in FIG. 17, the method further includes using a second machining technique to further machine the preliminary groove(s) 131 to form the respective groove(s) 132 in the structural coating 54. For the illustrated process, a second structural coating 56 is deposited over the structural coating 54 after the machining operations. The two structural coating layers may comprise the same or different materials and may possess the same or different properties.

As indicated in FIG. 18, the method further includes forming one or more access holes 140 through the base 134 of a respective one of the grooves 132 to connect the respective groove 132 in fluid communication with respective hollow interior space(s) 114. The access holes 140 are typically formed after the grooves have been formed but may also be formed prior to the first machining operation or between the first and second machining operations. As noted above, the access hole(s) 140 may be formed using the first or second machining technique or using another machining technique, for example, laser drilling. As also noted above, structural coatings 54 formed using an ion plasma deposition may have thicknesses of less than about 0.5 mm, but for a thermal plasma spray (such as high velocity oxygen fuel spraying) coating, the thickness of the structural coating 54 may be less than about 1 mm. The grooves may be entirely formed within the structural coating 54, as shown in FIG. 18 or may extend into the substrate 110.

Example first and second machining techniques are described above. For the illustrated process, the first machining technique comprises abrasive liquid jet, and the preliminary grooves 131 are formed by directing an abrasive liquid jet 160 at the structural coating 54. As discussed above, examples for the second machining technique include ECM, EDM, milling EDM, and laser machining. More particularly, if ECM is selected, plunge ECM may be employed. For particular processes, the first machining technique comprises abrasive liquid jet, and the second machining technique comprises milling EDM.

Although not expressly shown, re-entrant shaped grooves may be formed in the structural coating 54 using this method. For example, re-entrant shaped (see FIG. 6) preliminary grooves 131 may be formed in the structural coating 54 using an abrasive liquid jet 160 and then a second machining technique may be applied to finish the re-entrant shaped grooves 132, as discussed above with reference to FIGS. 6-8, except that the grooves are now formed in the structural coating 54.

Although not expressly shown, a fugitive coating 30 may be used as a mask when forming grooves in the structural coating. For this process, the method further includes depositing a fugitive coating 30 on the structural coating 54 prior to performing the first machining technique. For this process, the structural coating 54 is machined through the fugitive coating 30, and the machining forms one or more openings 34 (FIGS. 10 and 11) in the fugitive coating 30. The fugitive coating 30 is removed after performing the second machining technique. The fugitive coating may be removed before or after the access holes 140 are formed. Although this particular process is not expressly shown, the fugitive coating shown in FIG. 3 may be deposited on the structural coating shown in FIG 12 and the machining steps shown in FIGS. 16 and 17 may be performed through the two coatings 30, 54. As noted above, the fugitive coating 30 acts as a machining mask for formation of the channels, and for this process facilitates the formation of cooling channels 130 with the requisite sharp, well defined edges at the interface between the structural coating 54 and the subsequently deposited structural coating 56 (FIG. 18).

A component 100 embodiment of the invention is described with reference to FIGS. 2-8, 13-15, 19, and 20. As indicated, for example, in FIG. 2, the component 100 includes a substrate 110 comprising an outer surface 112 and an inner surface 116. As indicated, for example, in FIG. 2, the inner surface 116 defines at least one hollow, interior space 114. As indicated, for example, in FIGS.19 and 20, the outer surface 112 defines one or more grooves 132 that extend at least partially along the outer surface 112 of the substrate 110 and have a base 134. As indicated, for example, in FIG. 4, each groove 132 is characterized by a sidewall 135 radius R in a range of 0≤R≤0.127 mm. If the grooves 132 are formed using the above described hybrid machining processes, the initial sidewall radius R may be in a range of 0<R< 0.254 mm after the first machining operation. Performance of the second machining operation reduces the radius R, such that the resulting sidewall 135 radius R is in the range of 0≤R≤0.127 mm. For example, using a liquid jet to form the preliminary grooves may result in a relatively large sidewall radius, whereas performance of a subsequent milling EDM operation reduces (and in some instances removes) that radius.

One or more access holes 140 extend through the base 134 of a respective groove 132 to place the groove 132 in fluid communication with the interior space(s) 114, as shown for example in FIGS. 5 and 8. As discussed above, the access holes 140 may be normal to the base 134 of the respective grooves 132 (as shown in FIGS. 5 and 8) or may be drilled at angles in a range of 20-90 degrees relative to the base 134 of the groove 132.

As indicated in FIGS. 2 and 19, the component further includes a coating 150 disposed over at least a portion of the outer surface 112 of the substrate 110 and extending over the groove(s) 132, such that the groove(s) 132 and the coating 150 together defme one or more channels 130 for cooling the component 100. More particularly, the sidewall 135 radius R (which is indicated, for example, in FIGS. 3, 10, 13 and 16) is in the range 0≤R≤0.0508 mm. Beneficially, the grooves 132 have less groove-to-groove variation than would be formed using only a single abrasive water jet machining process because the finishing operation provides more control over the sidewall radius R. For example, the groove-to-groove variation of the sidewall radius R is less than about 50% of desired nominal value, and more particularly, is less than about 20% of desired nominal value. For the arrangement shown in FIGS. 19 and 20, the grooves extend through a first structural coating layer 54, as discussed above with reference to FIGS. 13-15. For other arrangements, the grooves 132 do not extend through a structural coating, as discussed above with reference to FIGS. 3-5.

For the example configuration shown in FIG. 8, the base 134 of each groove 136 is wider than the top 136 of the groove, such that each groove 132 comprises a re-entrant shaped groove 132. Re-entrant grooves are discussed above with reference to FIGS. 6-8.

For the particular configuration shown in FIGS. 19 and 20, the coating 150 comprises at least a first and a second structural coating 54, 56. As indicated in FIG. 20, the first structural coating layer 54 does not extend over the groove(s) 132, and the second structural coating 56 is disposed over the first structural coating (54) and extends over the groove(s) 132, such that the groove(s) 132 and the second structural coating 56 together define the one or more cooling channels 130.

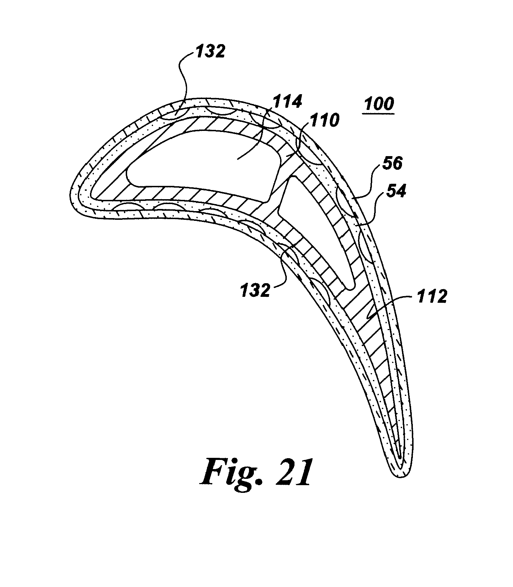

Another component 100 embodiment of the invention is described with reference to FIGS. 18-21. As indicated, for example, in FIG. 21, the component 100 includes a substrate 110 comprising an outer surface 112 and an inner surface 116. As indicated, for example, in FIG. 21, the inner surface 116 defines at least one hollow, interior space 114. As indicated, for example, in FIGS. 18 and 21, the component 100 further includes a structural coating 54 disposed over at least a portion of the outer surface 112 of the substrate 110. As indicated in FIG. 18, the structural coating 54 defines one or more grooves 132. As with the configuration shown in FIGS. 19 and 20, each groove 132 extends at least partially along the substrate 110 and has a base 134. Each groove (132) is characterized by a sidewall 135 radius R (FIG. 16) in a range of 0≤R≤0.127 mm, such that the groove-to-groove variation is tightly controlled for the component 100. As noted above the grooves may be entirely formed within the structural coating 54, as shown in FIGS. 16-18, or may extend into the substrate 110. The grooves and techniques used to form the grooves are discussed above. For example configurations, the grooves are re-entrant shaped, as described above with reference to FIGS. 6-8.

One or more access holes 140 extend through the base 134 of a respective groove 132 to place the groove 132 in fluid communication with the interior space(s) 114, as shown for example in FIG. 18. As discussed above, the access holes 140 may be normal to the base 134 of the respective grooves 132 (as shown in FIG. 18) or may be drilled at angles in a range of 20-90 degrees relative to the base 134 of the groove 132.

As indicated in FIG. 18, the component 100 further includes at least one additional coating 56 disposed over the structural coating 54 and over the groove(s) 132, such that the groove(s) 132 and the additional coating 56 together define one or more channels 130 for cooling the component 100. As indicated, for example, in FIGS. 19 and 20, at least one exit hole 142 extends through the additional coating 56 for each channel 132, to receive and discharge a coolant fluid from the respective channel 130. More particularly, the sidewall 135 radius R is in the range 0≤R≤0.0508 mm. This arrangement is shown in FIG. 18.

The coatings 54, 56 are described above. For particular configurations, the additional coating 56 comprises a second structural coating 56. As noted above, for particular configurations, the structural coatings 54, 56 comprise the same coating material. For other configurations, the two structural coatings 54, 56 may comprise different coating materials. The structural coatings 54, 56 may be deposited using the same or different deposition techniques.) For example configurations, the structural coating 54 has a thickness of less than about 1.0 mm and, more particularly, less than about 0.5 mm. For example, structural coatings 54 formed using an ion plasma deposition may have thicknesses of less than about 0.5 mm, but for a thermal plasma spray (such as high velocity oxygen fuel spraying) coating, the thickness of the structural coating 54 may be less than about 1 mm.

As noted above the above-described hybrid machining processes provide the speed (and hence reduced manufacturing cost) of abrasive liquid jet, with the precision machining of milling EDM. In this way, the inventive methods can be used to produce cooled components with the desired sharp edges at the channel/coating interface, to facilitate a flaw free deposition of the first metallic (structural) coating.

Although only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A method of forming one or more grooves in a component, the method comprising:
   depositing a structural coating on an outer surface of a substrate, wherein the substrate has at least one hollow interior space;
   using a first machining technique to form one or more preliminary grooves in the structural coating, wherein each of the one or more preliminary grooves has a base and extends at least partially along the substrate;
   using a second machining technique to further machine the one or more preliminary grooves to form the respective one or more grooves in the structural coating; and
   forming one or more access holes through the base of a respective one of the grooves to connect the respective groove in fluid communication with respective ones of the at least one hollow interior space.
2. The method of Clause 1, further comprising casting the substrate prior to forming the one or more preliminary grooves in the structural coating.
3. The method of Clause 1, wherein the first machining technique comprises abrasive liquid jet, and wherein the one or more preliminary grooves are formed by directing an abrasive liquid jet at the structural coating.
4. The method of Clause 2, wherein the second machining technique is selected from the group consisting of electrochemical machining (ECM), electric discharge machining (EDM), electric discharge machining with a spinning electrode (milling EDM), and laser machining (laser drilling).
5. The method of Clause 2, wherein the second machining technique comprises milling EDM.
6. The method of Clause 2, wherein each of the one or more grooves has a top, wherein each of the one or more preliminary grooves formed using the abrasive liquid jet has a base that is wider than the top, such that each of the one or more preliminary grooves comprises a re-entrant shaped preliminary groove, and wherein the base of the groove is wider than the top, such that each of the one or more grooves comprises a re-entrant shaped groove.
7. The method of Clause 1, further comprising:
   depositing a fugitive coating on the structural coating prior to performing the first machining technique, wherein the structural coating is machined through the fugitive coating, and wherein the machining forms one or more openings in the fugitive coating;
   removing the fugitive coating after performing the second machining technique.
8. The method of Clause 1, further comprising performing a heat treatment after depositing the structural coating.
9. The method of Clause 1, wherein the structural coating is deposited by performing one or more of an ion plasma deposition, a thermal spray process and a cold spray process.
10. The method of Clause 1, wherein at least one of the steps of using the first and second machining techniques comprises machining into the substrate such that the one or more grooves extend into the substrate.
11. A component comprising:
   a substrate comprising an outer surface and an inner surface, wherein the inner surface defines at least one hollow, interior space;
   a structural coating disposed over at least a portion of the outer surface of the substrate, wherein the structural coating defines one or more grooves, wherein each of the one or more grooves extends at least partially along the substrate and has a base,
   and wherein one or more access holes extend through the base of a respective one of the one or more grooves to place the groove in fluid communication with respective ones of the at least one hollow interior space, wherein each groove is characterized by a sidewall radius R in a range of 0≤R≤0. 127 mm; and
   at least one additional coating disposed over the structural coating and over the one or more grooves, such that the one or more grooves and the additional coating together define one or more channels for cooling the component, wherein at least one exit hole extends through the additional coating for each of the respective one or more channels, to receive and discharge a coolant fluid from the respective channel.
12. The component of Clause 11, wherein each of the one or more grooves has a top, wherein the base is wider than the top, such that each of the one or more grooves comprises a re-entrant shaped groove.
13. The component of Clause 11, wherein the additional coating comprises a second structural coating.
14. The component of Clause 11, wherein the grooves extend through the structural coating into the substrate.

## Claims

1. A method of forming one or more grooves (132) in a component (100), the method comprising:
using a first machining technique to form one or more preliminary grooves (131) in an outer surface (112) of a substrate (110), wherein each of the one or more preliminary grooves (131) has a base (134) and extends at least partially along the outer surface (112) of the substrate (110), and wherein the substrate (110) has an inner surface (116) that defines at least one hollow, interior space (114);
using a second machining technique to further machine the one or more preliminary grooves (131) to form the respective one or more grooves (132); and
forming one or more access holes (140) through the base (134) of a respective one of the grooves (132) to connect the respective groove (132) in fluid communication with respective ones of the at least one hollow interior space (114).

2. The method of Claim 1, further comprising casting the substrate (110) prior to forming the one or more preliminary grooves (131) in the outer surface (112) of the substrate (110), wherein the first machining technique comprises abrasive liquid jet, and wherein the one or more preliminary grooves (131) are formed by directing an abrasive liquid jet (160) at the outer surface (112) of the substrate (110).

3. The method of Claim 2, wherein the second machining technique is selected from the group consisting of electrochemical machining (ECM), electric discharge machining (EDM), electric discharge machining with a spinning electrode (165) (milling EDM), and laser machining (laser drilling).

4. The method of Claim 2, wherein each of the one or more grooves (132) has a top (136), wherein each of the one or more preliminary grooves (131) formed using the abrasive liquid jet (160) has a base (234) that is wider than the top (236), such that each of the one or more preliminary grooves (131) comprises a re-entrant shaped preliminary groove (131), and wherein the base (134) of the groove (132) is wider than the top (136), such that each of the one or more grooves (132) comprises a re-entrant shaped groove (132).

5. The method of any of Claims 1 to 4, further comprising:
depositing a fugitive coating (30) on the outer surface (112) of the substrate (110) prior to performing the first machining technique, wherein the substrate (110) is machined through the fugitive coating (30), and wherein the machining forms one or more openings (34) in the fugitive coating (30);
removing the fugitive coating (30) after performing the second machining technique.

6. The method of any of Claims 1 to 5, further comprising depositing a structural coating (54) on the outer surface (112) of the substrate (110) prior to forming the one or more preliminary grooves (131),
wherein the one or more preliminary grooves (131) are formed by performing the first machining technique to machine through the structural coating (54), such that one or more openings (58) are defined in the structural coating (54), and wherein the one or more grooves (132) are formed by performing the second machining technique through the one or more openings (58) in the structural coating (54).

7. The method of Claim 6, further comprising performing a heat treatment after depositing the structural coating (54).

8. The method of Claim 6 or 7, wherein the structural coating (54) is deposited by performing one or more of an ion plasma deposition, a thermal spray process and a cold spray process.

9. A component (100) comprising:
a substrate (110) comprising an outer surface (112) and an inner surface (116), wherein the inner surface (116) defines at least one hollow, interior space (114), wherein the outer surface (112) defines one or more grooves (132), wherein each of the one or more grooves (132) extends at least partially along the outer surface (112) of the substrate (110) and has a base (134), wherein each groove (132) is **characterized by** a sidewall (135) radius R in a range of 0≤R≤0.127 mm, and wherein one or more access holes (140) extend through the base (134) of a respective one of the one or more grooves (132) to place the groove (132) in fluid communication with respective ones of the at least one hollow interior space (114); and
a coating (150) disposed over at least a portion of the outer surface (112) of the substrate (110) and extending over the one or more grooves (132), such that the one or more grooves (132) and the coating (150) together define one or more channels (130) for cooling the component (100).

10. The component of Claim 9, wherein each of the one or more grooves (132) has a top (136), wherein the base (234) is wider than the top (136), such that each of the one or more grooves (132) comprises a re-entrant shaped groove.

11. The component of Claim 9 or 10, wherein the coating (150) comprises at least a first (54) and a second (56) structural coating, wherein the first structural coating layer (54) does not extend over the one or more grooves (132), and wherein the second structural coating (56) is disposed over the first structural coating (54) and extends over the one or more grooves (132), such that the one or more grooves (132) and the second structural coating (54) together define the one or more cooling channels (130).

12. The component of any of Claims 9 to 11, wherein the grooves (132) extend through the structural coating (54,56) into the substrate (110).
